# EUROPEAN PATENT APPLICATION

(11) **EP 1 160 051 A1**
(43) Date of publication of application: **05.12.2001**
(21) Application number: 01304677.6
(22) Date of filing: 30.05.2001
(51) Int. Cl.: B23P 19/06, F16B 37/06

(54) **Self-fixing bolt and an assembly thereof attached to a panel**

(30) Priority: 01.06.2000 JP 2000164006
(71) Applicant: YUGENKAISHA SHINJO SEISAKUSHO, Nishinariku, Osaka (JP)
(72) Inventor: Shinjo, Katsumi, Nishinai-ku, Osaka (JP)
(74) Representative: Price, Paul Anthony King

(57) **Abstract**

A self-fixing bolt 1 has a male-threaded body 2 and an annular barrel portion 3 having an upper region that continues from the lower end of the body. The barrel portion 3 has an outer periphery larger in diameter than the body 2, the barrel portion having a cylindrical opening 4 with a lower end to punch a hole in the metal panel 10 when driven to be attached to this panel. The bolt has a thrust-bearing shoulder 5 formed integral with the upper region of the barrel portion. Anti-rotation retentive lugs 9 are arranged as longitudinal ribs around the outer periphery 8 of the barrel portion and project radially outwards. Each lug 9 has a triangular or trapezoidal cross-section.

The self-fixing bolt does not need an oversized flange between the body and barrel portion, and is thus of smaller size and lighter weight, whilst still preventing unwanted rotation of the bolt when the panel and bolt have been assembled together.

## Description

### FIELD OF THE INVENTION

The present invention relates to a self-fixing 'one-shot' bolt that will permanently be secured in an opening which the bolt itself punches in and through a metal panel, owing to the bolt's riveting action. The present invention relates also to an assembly of such a panel portion and a self-fixing bolt riveted thereto.

### PRIOR ART

Some types of the self-fixing bolts and the assemblies thereof each riveted to a metal panel are known as disclosed for example in the Japanese Utility Model Laying-Open Gazette Sho.58-135516 and the Patent Publication No. Hei.7-41357.

Those self-fixing bolts have each a male-threaded body and an annular barrel portion continuing therefrom. The lower end or rim of such a portion will be deformed radially and outwardly when striking it through the metal panel and fixing it in an opening thus punched in the panel.

The prior art self-fixing bolts generally have large flanges disposed at the upper ends of their barrel portions. Those flanges are of a diameter extremely greater than that of the barrel portions in order to provide annular supports facing and contacting the metal panel upper face.

Car manufacturers, who are one of main users of self-fixing bolts, have been making their efforts to render car parts much smaller in size and much lighter in weight. Therefore, those oversized flanges formed each between the threaded body and the barrel portion have made it difficult to meet such a requirement. Each of self-fixing bolts of this type does need a relatively wide area for attachment thereof, sometimes making it impossible to be disposed in a narrow space restricted due to the designed structure of cars. In addition, the bolt's large flange shown in the Patent Publication '357 is intended to emboss the metal panel at its region underlying said flange. Such an embossing for bringing the flange's upper surface in flush with the panel surface does however impair mechanical strength of the embossed region, particularly against a driving thrust that will occasionally be imparted to the threaded body during use.

### SUMMARY OF THE INVENTION

An aspect of the present invention made in view of the drawbacks inherent in the prior art structure is to provide a self-fixing bolt and its assembly with a panel such that any oversized flange can now be dispensed with. The bolt and its assembly provided herein and rendered smaller and lighter should nevertheless enable it to firmly secure it to the panel portion and should surely protect it from any idle rotation relative thereto.

In a preferred aspect, a self fixing 'one-shot' bolt provided herein does comprise: a male-threaded body having a lower end, an annular barrel portion having an upper region that continues from the lower end, has an outer periphery and is larger in diameter than the male-threaded body, the barrel portion having a cylindrical opening with a lower and annular free end to punch a hole in a metal panel, when driven to be attached thereto, a thrust-bearing shoulder formed integral with the upper region of the barrel portion, and a plurality of anti-rotation retentive lugs that protrude from the outer periphery of the barrel portion and extend longitudinally thereof so as to be pointed outwards in a radial direction.

Preferably, each anti-rotation retentive lug may be of a triangular or trapezoid shape in cross section sharpened in radial direction towards its outer edge or face.

Also preferably, those lugs may gradually decrease their size or width in a tangential direction and towards the end opening so as to terminate at a middle height of the outer periphery. Such a bolt will show a diminished resistance to the punching thrust applied thereto, nevertheless enhancing its anti-rotation effect.

An assembly of a self-fixing bolt attached to a metal panel is also provided herein, being constructed as follows on condition that the bolt comprises a male-threaded body and an annular barrel continuing from the lower end thereof. The annular barrel portion has a cylindrical free end to punch a hole in the panel, when driven to be attached thereto. The bolt has a thrust-bearing shoulder integral with the upper end of barrel portion that is of a larger diameter than the body. The bolt further has anti-rotation retentive lugs protruding from the outer periphery of said portion so as to be pointed radially and outwards and extending longitudinally of the barrel portion. The assembly comprises the flare of the cylindrical free end of the barrel portion struck into the panel such that its rim is bent back towards the panel to provide an annular U-shaped groove. A rim of the panel defining the hole punched therein is forced into the U-shaped groove that is subsequently depressed to firmly grip the panel's rim in a caulking manner. In this assembly, the anti-rotation retentive lugs of the bolt's barrel portion are forced to take their position strongly biting the inner periphery of the punched hole in the panel.

### BRIEF DESCRIPTION OF THE DRAWINGS

Fig. 1 is a front elevation of a self-fixing bolt provided herein and shown partly in cross section;
Fig. 2 is a bottom plan view of the self-fixing bolt;
Fig. 3 is likewise a bottom plan view of the self-fixing bolt provided in another embodiment;
Fig. 4 is a cross-sectional front elevation of the bolt that is ready to be struck into a metal panel;
Fig. 5 similarly is a cross-sectional front elevation of the bolt that has started to be struck into the panel;
Fig. 6 also is a cross-sectional front elevation of the bolt that has punched a hole in the panel;
Fig. 7 is a cross-sectional front elevation of the bolt whose barrel portion has thus been bent outwards to produce a flare beneath the metal panel;
Fig. 8 is likewise a cross-sectional front elevation of the bolt that has been fixed finally in the panel;
Fig. 9 is a top plan view of the bolt thus finally fixed in the panel; and
Fig. 10 is a cross-sectional front elevation of the modified type of a caulking die employed herein in order to strike, press and cause the bolt to punch the hole in the panel so as to be fixed therein.

### THE PREFERRED EMBODIMENTS

Now some embodiments of the present invention will be described in detail referring to the drawings.

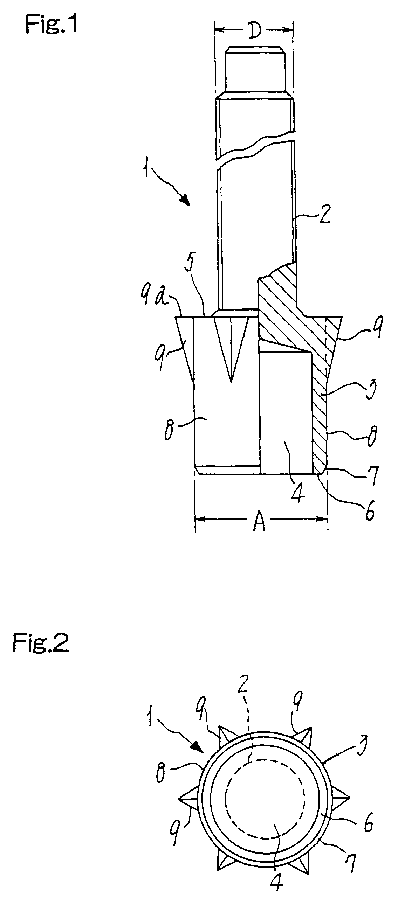

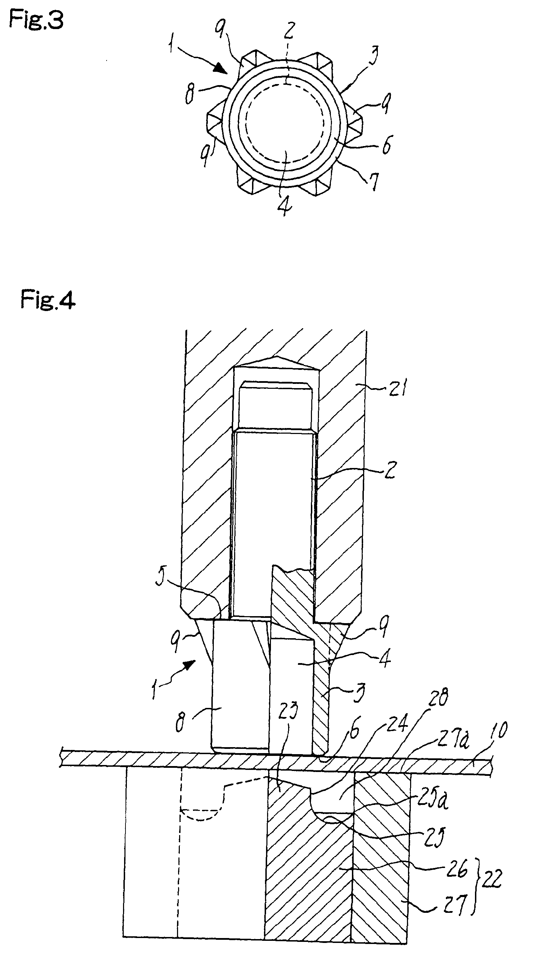

Figs. 1 and 2 show a self-fixing bolt 1 provided herein. The bolt 1 comprises a male-threaded body 2 whose lower end is integral with an annular barrel portion 3. This portion 3 serves as a member for punching a hole in a metal panel and has an end opening or cavity 4 extending coaxially with the threaded body 2. The diameter 'A' of the barrel portion 3 is somewhat greater than the diameter 'D' of the threaded body 2, so that an annular thrust-bearing shoulder is formed at the upper end of said barrel portion. The lower end of the barrel portion 3 is formed as an annular punching face 6 and a beveled guide 7 extending obliquely and upwards from the punching face. The barrel portion 3 has an outer periphery 8 with a plurality of ('six' in the illustrated example) anti-rotation lugs 9 which point outwardly in radial direction and extend longitudinally of said portion 3. Each of the lugs 9 is of a triangular cross section, and its upper face is disposed flush with the thrust-bearing shoulder 5. Those anti-rotation lugs 9 decrease their width in tangential direction and towards the lower end of barrel portion, and terminate short of this end and at a middle height of the outer periphery 8. The cross-section of each anti-rotation lug 9 is not restricted to such a triangular shape as shown in the drawings but may be modified in an appropriate manner insofar as they are pointed outwardly. For example, they may be each of a trapezoid shape whose outer top side is narrower than its inner bottom as seen in Fig. 3. The upper face 9a of each anti-rotation lug 9 and that of said thrust-bearing shoulder 5 may not necessarily be included together in one and the same plane. However, those lugs' upper faces 9a flush with the shoulder 5 will be advantageous in that the thrust of a punching plunger is applied to a wider area. If, as mentioned above, the anti-rotation lugs 9 decrease their width towards the lower end of barrel portion and terminate at the middle height of outer periphery 8, then such a bolt will show less resistance to the thrust punching a metal panel 10, whilst still providing a strong anti-rotation effect.

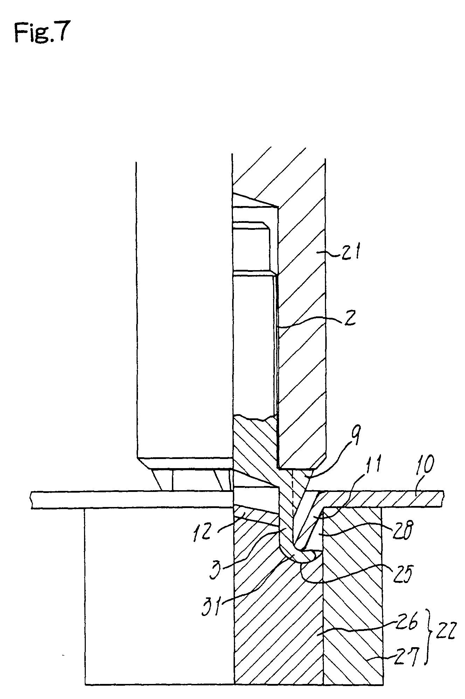

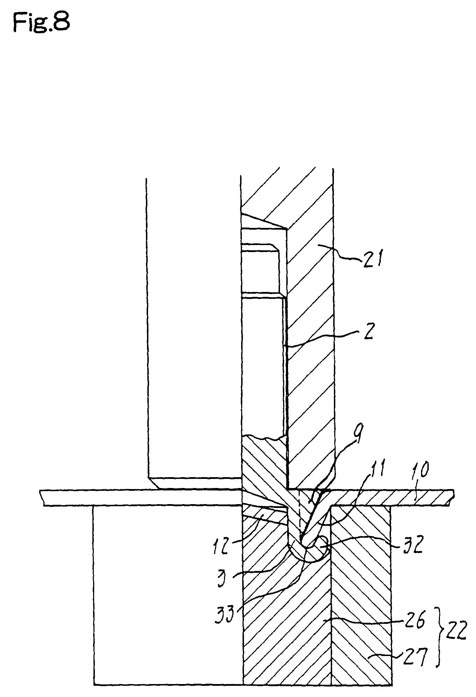

Figs. 4 to 8 illustrate a process of assembling the metal panel 10 and the self-fixing bolt 1 that will be struck, pressed and attached thereto. An apparatus used to carry out this process may comprise a cylindrical plunger 21 and a caulking die 22 facing same. This plunger 21 will be fitted on the bolt's threaded body 2 so as to force the shoulder 5 downwards, with the die being arranged coaxial with said plunger.

The caulking die 22 is composed of a button-shaped die member 26 and a cylindrical support 27. The die member 26 has a conical end 23 bearing the punching thrust and being of a diameter slightly smaller than the inner diameter of the bolt's end opening 4. A short upright periphery 24 of the conical end 23 extends longitudinally thereof, and an annular concave 25 continues from the lower end of said periphery and extends outwardly in cross section. The cylindrical support 27 surrounding the button-shaped die member 26 has an upper end 27a disposed at level somewhat higher than the conical end 23. Thus, a generally annular space 28 is defined between this support 27 and this end 23.

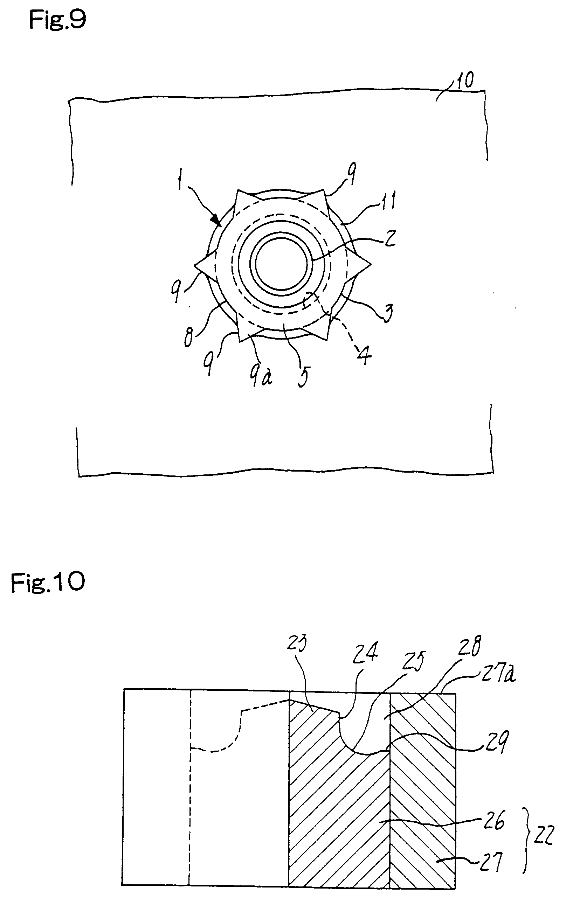

Fig. 10 shows a modification of the caulking die, wherein the outer circular edge 25a of the button-shaped member's annular concave 25 is protected from damage, by chamfering said edge 25a to form a short and flat annular zone 29.

For an easier machining of a raw material to manufacture the caulking die 22, its button-shaped member 26 and cylindrical support 27 therefor are prepared as discrete members in the illustrated example. Alternatively, the die 22 may simply be composed of one member 26 whose outer and circular edge 25a is prolonged upwards to provide the annular space 28 as noted above.

Now, a process of producing an assembly using the described self-fixing bolt 1 will be described.

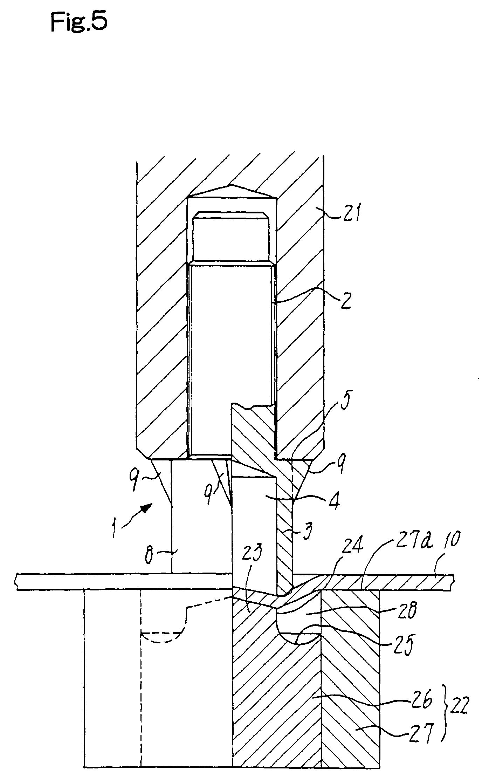

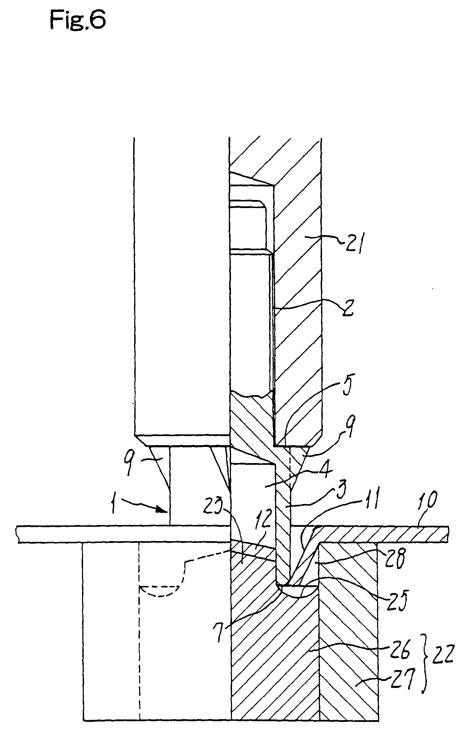

At first, a metal panel 10 will be laid on the upper end face 27a of cylindrical support 27 constituting the caulking die 22, in a manner as shown in Fig. 4. Then, the punching barrel portion 3 of the bolt 1 whose threaded body 2 has been fitted in the cylindrical plunger 21 is brought into contact with a desired spot of the panel 10. Thereafter, this plunger 21 will thrust the shoulder 5 of barrel portion 3 so as to cause the latter to sink into the metal panel. At this step, the die's conical end 23 will cooperate with the barrel portion 3 to produce at the spot of metal panel a generally conical deformation, as will be seen in Fig. 5. By further forcing down the bolt's barrel portion 3, its end face 6 punches a hole through the panel 10 as shown in Fig. 6. The panel's circular zone 11 defining the thus punched hole is forced to assume a conical configuration, while being guided by and along the beveled edge 7 of said portion 3, deep into an annular recess 28 so as to advance towards but short of the annular concave surface 25. On the other hand, a slug 12 severed from the remainder of said panel 10 remains in the barrel portion's opening 4 due to the die's conical end 23. Subsequent to such change in configuration as mentioned above, a flare 31 of the barrel portion 3 having pierced the metal panel will continue to expand radially and outwardly along the concave surface 25 in the caulking die. As a result of a further downward pressing of the barrel, the free circular end of flare 31 is forcibly deflected up towards the panel 10 also along the said concave surface 25, until producing a rim 32 U-shaped in cross section. An annular groove 33 thus appearing in the U-shaped rim 32 will come into a forced engagement with the metal panel's circular region 11 defining the described punched hole. At the same time as this region is enclosed in the caulked U-shaped rim 32, the anti-rotation lugs 9 jutting out from the periphery 8 of barrel portion 3 will strongly bite the conical inner periphery of the circular region 11, thereby firmly fixing the barrel portion in the panel 10. As a result, the threaded body 2 of the bolt 1 attached in this way to the metal panel will stand upright, with the slug 12 forced in the barrel's opening 4 being left on the bottom thereof.

In summary, the cylindrical barrel portion of the self-fixing 'one-shot' bolt provided herein is not accompanied by any oversized flange, so that the bolt can now be made smaller in size and lighter in weight. The barrel portion for punching a metal panel has an outer periphery formed integral with anti-rotation lugs that will strongly bite the inner periphery of an opening punched in the panel, whereby the bolt is surely protected from any undesired idle rotation relative to the panel.

## Claims

1. A self-fixing bolt comprising: a male-threaded body having a lower end, an annular barrel portion having an upper region that continues from the lower end, has an outer periphery and is larger in diameter than the male-threaded body, the barrel portion having a cylindrical opening with a lower and annular free end to punch a hole in a metal panel, when driven to be attached thereto,
**characterized by** a thrust-bearing shoulder formed integral with the upper region of the barrel portion, and also by a plurality of anti-rotation retentive lugs that protrude from the outer periphery of the barrel portion and extend longitudinally thereof and project outwards in a radial direction.

2. A self-fixing bolt as defined in claim 1, wherein the anti-rotation lugs gradually decrease their tangential width
towards the lower and annular free end of the barrel portion so as to terminate at a middle height of the outer periphery.

3. A self-fixing bolt as defined in claim 1 or 2, wherein the anti-rotation lugs gradually decrease their radial height towards the lower and annular free end of the barrel portion.

4. A self-fixing bolt as defined in any preceding claim, wherein each anti-rotation lug has a cross-sectional profile having at least one sharp longitudinal edge.

5. A self-fixing bolt as defined in any preceding claim, wherein each anti-rotation lug has a triangular or trapezoidal cross-section.

6. An assembly comprising a metal panel and a self-fixing bolt which is according to any preceding claim and is struck into the metal panel, wherein:
the metal panel has a punched hole with an inner periphery;
the barrel portion extends into the hole;
a flare is formed of the lower and annular free end of the barrel portion;
a rim of the flare extends back towards the panel to provide an annular U-shaped groove;
the periphery of the punched hole extends into the U-shaped groove and is firmly gripped therein in a caulking manner; and
the anti-rotation retentive lugs of the barrel portion bite into the inner periphery of the punched hole in the panel.
